# EUROPEAN PATENT SPECIFICATION

(11) **EP 2 102 639 B1**
(45) Date of publication and mention of the grant of the patent: **29.08.2012**
(21) Application number: 06829531.0
(22) Date of filing: 12.12.2006
(51) Int. Cl.: G01N 25/72, G01B 11/24, G01B 11/04

(54) **SYSTEM AND METHOD FOR THE DEFECT ANALYSIS OF WORKPIECES**
SYSTEM UND VERFAHREN ZUR DEFEKTANALYSE VON WERKSTÜCKEN
SYSTEME ET PROCEDE POUR L'ANALYSE DE DEFAUTS DE PIECES

(43) Date of publication of application: 23.09.2009
(73) Proprietor: Montanuniversität Leoben, 8700 Leoben (AT)
(72) Inventor: O'LEARY, Paul, 8323 St. Marein b. Graz (AT); OSWALD-TRANTA, Beate, 8700 Leoben (AT); WALLY, Gernot, 8793 Trofaiach (AT)
(74) Representative: Dilg, Haeusler, Schindelmann Patentanwaltsgesellschaft mbH
(86) International application number: PCT/EP2006/011949
(87) International publication number: WO 2008/071204

(56) References cited:
- EP-A- 1 069 430
- EP-A2- 0 280 857
- US-A- 4 109 508
- US-A- 4 480 928
- US-A- 5 402 364
- US-A1- 2005 023 468

## Description

The invention relates to an apparatus for analyzing an object.

The invention further relates to a method of analyzing an object.

Moreover, the invention relates to a program element.

Further, the invention relates to a computer-readable medium.

Beyond this, the invention relates to a method of use.

Fabricated elements (for instance forged or cast or rolled) are manufactured in large number and in large geometrical variety. Such elements, members or parts are employed, for instance, in automobile industry, wherein a quality control of almost 100% is required. In the case of a bimetallic strip, two different kinds of metal (such as steel) may be welded together by a laser, wherein the quality of the welding seam has to be analyzed.

Cracks in, for instance forged or cast, members are conventionally detected using the method of magnetic flow: After magnetizing the member, magnetic powder (for instance mixed with a fluorescence dye) is supplied to the member and may accumulate around a crack. The fluorescence agent can be made visible using ultraviolet light in closed chambers and can be visually inspected by a human operator. Therefore, the result of the analysis needs the introduction of human resources, which are expensive and may be prone to fail.

Further, analysis apparatuses equipped with cameras are used which automatically test or examine cracks (see EP 0,788,599). However, the large variety of geometries and complex shapes and contours of the members make the implementation of such apparatuses difficult.

Another conventional method tests the members by a vibration analysis (see http://www.medav.de/crackmaster.html). With such a technique, the excitation can be performed via knocking devices, and generated acoustic waves may be registered and analyzed. A shortcoming of such methods is that artefacts of a detected defect may occur. Furthermore, when different geometries are used, a large effort for pre-examinations and simulations is necessary in order to determine whether the generated acoustic waves are capable to show defects in each portion of the members. Geometrical defects and tolerances of forged or cast members are often tested in a manual manner.

Simple geometries, such as bimetallic strips can also be examined by an eddy current test with regard to the presence of cracks (see http://www.foerstergroup.com/NDT).

A light-section procedure may be implemented for a geometrical test, for instance for railway tracks.

A magneto-thermal method is a technique in order to detect cracks in metallic semi-finished parts or in other metallic members (see US 4,480,928, US 4,109,508, EP 1,069,430, EP 1,659,396).

US 2005/023468 discloses surface coating defect analysis with thermal measurements based on proper sensor positioning by geometry-sensing shell recognition sensor.

However, under undesired circumstances, conventional analysis systems for analyzing members may suffer from the fact that they are inappropriate for detecting defects with high accuracy.

It is an object of the invention to provide an accurate analysis system.

In order to achieve the object defined above, an analysis apparatus, a method of analyzing an object, a program element, a computer readable medium, and a method of use according to the independent claims are provided.

According to an exemplary embodiment of the invention, an apparatus for analyzing an object is provided, the analysis apparatus comprising a thermal analysis device adapted for analyzing a (particular temporal and/or spatial) thermal distribution of the object in response to a thermal activation of the object, a geometrical measurement device (or a geometrical detection device) adapted for analyzing a geometry of the object, and an evaluation unit adapted for performing a combined evaluation of information obtained form the thermal analysis device and from the geometrical measurement device, wherein the evaluation unit is adapted for projecting images of the object obtained by the thermal analysis device and obtained by the geometrical measurement device over another, so as to form a single image of the object under examination indicating results of both the geometrical analysis and the thermal analysis.

According to another exemplary embodiment of the invention, a method of analyzing an object is provided, the method comprising analyzing a thermal distribution of the object in response to a thermal activation of the object, analyzing a geometry (particularly a geometrical contour such as a cross-sectional contour) of the object, combining information obtained from the thermal analysis device and from the geometrical measurement device, and projecting images of the object obtained by the thermal analysis and obtained by the geometrical measurement over another, so as to form a single image of the object under examination indicating results of both the geometrical analysis and the thermal analysis.

According to another exemplary embodiment of the invention, an apparatus having the above mentioned features or a method having the above mentioned features is used for detecting defects, particularly cracks, in or near a surface of the object.

According to still another exemplary embodiment of the invention, a program element (e.g. a software routine, in source code or in computer-executable code) is provided, which, when being executed by a processor, is adapted to control or carry out a method of analyzing an object having the above mentioned features.

According to yet another exemplary embodiment of the invention, a computer-readable medium (e.g. a CD, a DVD, a USB stick, a floppy disk or a harddisk) is provided, in which a computer program is stored which, when being executed by a processor, is adapted to control or carry out a method of analyzing an object having the above mentioned features.

The object investigation scheme according to embodiments of the invention can be realized by a computer program, that is by software, or by using one or more special electronic optimization circuits, that is in hardware, or in hybrid form, that is by means of software components and hardware components.

In the context of this application, the term "object" denotes any physical structure (particularly any technical apparatus, member, or a portion thereof) in the real world which may be under development or analysis and shall therefore be investigated regarding compliance with quality requirements. Examples of such a physical structure may be a member or tool such as a forged or cast component (for instance a bimetallic strip or a lever) or a larger multiple component apparatus (such as a vehicle, more particularly a car). "Objects" may be forged, cast or rolled members, complete products or semifinished parts, members made of electrically conductive or electrically insulating material, carbon fiber members adhered to steel parts, etc.

The term "thermal distribution" denotes a spatially dependent and/or time-dependent temperature characteristic on a surface and/or in an interior of the object. Such a temperature distribution or gradient may result from a material inhomogeneity or other defects such as cracks of a member.

The term "geometrical contour" denotes an external two-dimensional or three-dimensional shape of the (surface of the) object.

The term "combined evaluation" denotes any evaluation scheme which is capable of considering a plurality of procedures for testing a product in common. Such an analysis may allow to consider the individual procedures for determining a product quality on an equal level or with special weightings. Thus, by performing such a combination, the procedures for testing a product are not treated isolatedly, but are (for instance mathematically/logically) combined to use them synergetically or for crosscheck purposes. Individual results of individual procedures for determining a product quality may be combined by overlying them visually so as to form a single image of the object under examination indicating results of both the geometrical analysis and the thermal analysis. Such a combination may further include the application of mathematical models, the estimation of a geometrically caused heating and/or a match with an actual distribution.

The term "defect" denotes that a quality of the manufactured object is not in an acceptable range, or does not fulfil acceptable tolerance requirements. For instance, metallic parts can have a variety of different defects:
- Geometrical defects: one part of the member may lack completely, or a part may have dimensions out of an acceptable range/tolerance.
- Cracks of different types: forging laps, hardness cracks, interior holes within a material, material crack, grooves, flashes, etc.
- Welding seams can have the defect that they are not formed completely.

These and other defects can be in a dimension of 0.2 mm to 1 mm (or more or less). During practical use of the manufactured member, the defects may cause damage of the member.

The analysis may comprise a comparison of analysis results regarding the object with a "golden device". A golden unit or golden device may denote an ideal example of a device against which all later devices are tested and judged. The term "golden" may be used to describe the precision of the device to standard specifications. According to an exemplary embodiment, the acquired thermal and geometrical result may be compared to a golden device or an ideal mathematical model. To obtain comparative data, a golden device may be analyzed by the apparatus.

An object such as a member or a tool may be investigated with regard to defects such as cracks not only by a single test scheme, but in contrast to this a geometrical analysis and a thermal analysis of the object may be combined synergetically. By considering both these methods in combination, complementary information obtainable by these two methods may be considered in common or in a combined way so as to obtain a deeper or more detailed understanding of the quality of the object under examination. This may allow for a more reliably classification of the quality of the object to be acceptable or not acceptable.

Thus, a combined thermal, optical and geometrical measurement of members, particularly of forged, cast or other (metal) members is made possible. For this purpose, the members may be moved along an analysis line. During this motion, it may be possible to measure simultaneously a three-dimensional image of the object, the surface properties may be determined, and a magneto-thermal examination procedure may be performed, in order to detect particularly near-surface defects. In this context, images acquired by infrared and optically are evaluated in a combined manner. Thus, during a motion of the object, different defects, such as material defects, surface cracks, near-surface defects as well as surface properties may be examined and may be evaluated regarding compliance with tolerances. This may allow for an automated examination of the defect origin in a fast and reliable manner. A statistic evaluation of the data may be made possible. Storage of results in a database is possible as well.

According to an exemplary embodiment, a combined optical and thermal examination procedure may be provided, wherein metallic members can be examined in a continuous two-step procedure with regard to geometrical deviations and near-surface defects (such as cracks).

In one step, the member to be examined may be geometrically analyzed threedimensionally using a light-section procedure. In another step, which may be carried out before, during or after the above step, an eddy current-induced examination may be performed for a thermographic evaluation to detect cracks or the like. For this purpose, for instance using an induction coil, a short current pulse can be excited in an electrically conductive device under test which may cause an increased or decreased (depending on geometry or other material properties being inspected) heating at a position of a defect. This may be detected using an infrared camera being positioned close to the surface of the member.

The sequence/timing of the geometrical analysis and of the thermal analysis can be adjusted in an appropriate manner: according to one embodiment, the sample is first tested thermally and then geometrically; and according to another embodiment, the sample is first tested optically and then thermally. A simultaneous measurement may be possible as well and may reduce test time.

Following these two measurement steps, result data may be further processed by image processing algorithms so as to identify deviations or defects, and - if desired- display these deviations or defects in an optical manner. This may form the basis for a visual inspection of the results by a human operator, but may also be used within a purely automatic evaluation system.

To enable the detection of defects also in an interior of the device under test or in areas of undercuts, it is possible to provide the (thermal and geometrical) analysis devices a plurality of times, and/or the detection steps may be performed a plurality of times. For example, two main surfaces of a member to be analyzed can be analyzed individually or separately, i.e. at first an upper surface is scanned and subsequently a lower surface is scanned.

Thus, the measurement procedures for evaluating the quality of the object may be combined to allow to perform a highly accurate three-dimensional imaging analysis. This combination of the multiple methods may allow to extend existing methods to detect defects with an improved accuracy. The amount of re-finishing operation or rework and the number of non-acceptable members may therefore be reduced in a manufacturing and testing line. Particularly, heating of parts of the object resulting from a specific geometry of the object on the one hand (for instance undercuts), and heating procedures resulting from defects of the object on the other hand (for instance cracks) may be separated. For example:
- Crack depths can be determined precisely, so that the reject quote may be reduced by simple rework.
- The adaptation of reference models to an actual geometry may allow for an improved resolution/accuracy of the measurement results.
- A number of physical properties of the member (for instance material modifications within the member) can be detected by the combination of the methods which may be not possible with an individual one of the methods.

Particularly, in the context of geometrically complex members having undercuts, etc., this may allow to improve the reliability of the test significantly.

In the following, further advantages will be explained which may be obtained by employing a combined magneto-thermal and geometrical inspection of the invention:
- The geometric data may allow a separation of geometry based heating and defect based heating. For specific members, it may be important that geometrical deviations are not considered as not acceptable rejects, but that near-surface cracks may be identified.
- Different physical origins (for instance alloy modifications at surfaces and geometrical modifications) may result in the same results in a thermal image. Using the geometrical data additionally, a broader basis for an evaluation of the quality of the member is obtained, thereby allowing to distinguish between different individual physical origins for the thermally detected characteristics.

- Defective portions of the object which protrude from the object surface (for example edges or ridges) and defects which extend within or into the surface of the object (for example inner edges or near-surface air occlusions) may result in identical or very similar thermal images. Since geometrical data are made available according to exemplary embodiments of the invention, these two origins of defects may be distinguished.
- Geometrically parameterized models for the radiation of the object (so-called virtual "golden device") can be adapted to the actually present geometries.
- By a combination of the thermal data and the geometrical data, it may be made possible to accurately determine a depth of the cracks.
- Angular information and therefore geometrically dependent radiation may be determined based on the available geometrical data. This property may be very important when evaluating members having a complex structure or geometry. This may be of specific importance in the case of a concave geometry of the object, since a concave geometry can result in the appearance of an increased emission, and therefore an increase of the observed temperature.
- The combination of both methods may be performed at one combined inspection apparatus, reducing the entire costs for the handling of the images to be inspected.

Next, further exemplary embodiments of the analysis apparatus will be explained. However, these embodiments also apply to the method, to the program element to the computer-readable medium, and to the method of use.

The analysis apparatus may comprise a thermal excitation unit adapted for thermally activating (i.e. heating) the object. Such a thermal excitation unit may be an oven in which the member is heated or an irradiation source for irradiating the object with electromagnetic radiation for absorption (for instance a laser or a flash lamp). Such an optical heating may be appropriate for an electrically non-conductive member. Alternatively, the thermal excitation unit may be an inductive thermal excitation unit, for instance may comprise an induction coil or any other eddy current generating unit adapted for being powered with an electric voltage for inducing eddy currents in the object to thereby thermally activate the object. When eddy currents are generated in the object, this may result in temperature increase due to ohmic losses in the object. A resulting temperature pattern (depending on shape, material composition, etc. of the object) can be detected by an infrared camera or any other thermal distribution detection device. Using an infrared camera, a temperature distribution of near-surface portions of the object may be detected, and a temperature distribution image may be generated by appropriate image processing routines.

The geometrical measurement device may comprise an electromagnetic radiation source adapted for illuminating a surface of the object with electromagnetic radiation and may comprise an electromagnetic radiation detector adapted for detecting the electromagnetic radiation after interaction with the object (for example reflection at the object or transmission through the object). Particularly, the geometrical measurement device may employ a light-section method to determine a three-dimensional external shape of the object under examination. Particularly, the electromagnetic radiation source may comprise a laser or any other component for emitting optical light. A laser may be a good choice since this may allow to generate an essentially monochromatic beam of coherent light having a small cross-sectional area, and may therefore allow for an accurate determination of the shape of the object. It may be possible to scan a surface of the object with the electromagnetic radiation source. Other electromagnetic radiation sources are possible, such as LED arrays, lasers (such as semiconductor lasers, HeNe lasers, particularly frequency doubling lasers), halogen lamps, etc. The wavelength of the electromagnetic radiation may be in the optical range, in the UV range, in the X-ray range, etc.

The electromagnetic radiation source may be adapted for generating a structured light beam. This may be obtained by providing appropriate optical elements such as holographic members, lenses, patterned glass plates, etc.

The electromagnetic radiation detector may comprise an optical camera, for instance a CCD camera (which may enable a cheap production of the apparatus) or a CMOS camera. It is also possible to provide a quantum well device or a semiconductor diode detector. A semiconductor camera may be formed in silicon technology, using PbTe, or as a bipolar device.

The electromagnetic radiation detector may be moved with regard to the electromagnetic radiation source so as to scan a surface of the object, thereby allowing to obtain a three-dimensional image. More particularly, the electromagnetic radiation source and the electromagnetic radiation detector may allow to detect a two-dimensional contour of the object. When the object is moved, the spatial/time dependence of the detection signals may allow to derive a three-dimensional structure of the object. Again, by using appropriate image processing algorithms, it may be possible to derive a three-dimensional surface image of the object.

The analysis apparatus may be adapted for moving the geometrical measurement device and the object relative to one another during performing the geometrical analysis. For instance, the object may be placed on a conveyor belt which may be moved so that the object may be scanned successively by the (fixed) optical camera. Alternatively, it is possible to keep the object fixed and to move the geometrical measurement device or components thereof. It is also possible to move both the object and the geometrical measurement device with respect to a lab system during the analysis.

Correspondingly, the analysis apparatus may be adapted for moving the thermal analysis device and the object relative to one another during performing the thermal analysis. This may allow to scan the object to determine a spatial dependence of the thermal distribution. Again, the thermal analysis device may be spatially fixed with respect to a lab system, and the object may move with respect to the lab system, or vice versa. It is also possible to move both the object and the thermal analysis device with respect to a lab system during the analysis.

The evaluation unit (for instance a computer or a microprocessor) is adapted for projecting, particularly for overlaying, images of the object obtained by the thermal analysis device and obtained by the geometrical measurement device. By virtually overlaying the two images or by projecting them over one another, a single image is obtained including geometrical and thermal information. By taking this measure, a meaningful inspection by a human operator or by a machine may be made possible. Such an overlaying or projecting procedure may include rotating one or both of the two images in space, modifying a size of one or both of the two images (re-scaling), or the like. Finally, a single three-dimensional image of the object may be obtained which reflects the geometrical properties of the object as well as the temperature distribution. The latter may be displayed, for instance using a corresponding coloring scheme (for example displaying hot portions with red color and cold portions with blue color).

The evaluation unit or processing unit may be adapted for determining a three-dimensional model of the object based on information obtained by the geometrical measurement device and may be adapted for patterning, particularly for coloring, a surface of the three-dimensional model in accordance with temperature distribution information obtained by the thermal analysis device. Particularly, warmer or colder portions of the object may be indicated. The variation in temperature may be in the order of ΔT=1°C-2°C. Therefore, an image of the member may be obtained in which geometrical and temperature information may both be included allowing for a more meaningful interpretation.

The evaluation or processing unit may be adapted for comparing results obtained from the combined evaluation with predetermined target data and for classifying the object as defective when a deviation of the results from the target data exceeds a predetermined threshold value and therefore does not comply with tolerances. Therefore, the obtained image may be compared with a "standard object" having ideal values, so that the quality of the object may be determined. More particularly, the evaluation unit may be adapted for comparing results obtained from the combined evaluation with predetermined target data and for determining a specific portion of the object as defective when a deviation of the results from the target data exceeds a predetermined threshold value. For example, warmer portions of the device may be suspicious and may be candidates for defects. When the high temperature is not a result of a specific geometrical property of this portion of the object, it may be interpreted as a defect, such as a crack. By identifying defective locations on the object, refinishing effort may be reduced.

The analysis apparatus may comprise a conveyor unit adapted for moving the object between the thermal analysis device and the geometrical measurement device. According to one embodiment, the object is first analyzed using the thermal analysis device and subsequently analyzed using the geometrical measurement device. However, according to another exemplary embodiment, the object is first analyzed using the geometrical measurement device and is then analyzed using the thermal analysis device. A conveyor belt or any other moving mechanism may be used to transport the object from one portion to the other one along an inspection line. The conveyor belt may be controlled by the processor as well.

The thermal distribution of an object may be detected and analyzed in a spatial and/or time-dependent manner. In other words, information may be derived from a location of warmer/colder portions and/or from a timing of the existence of warmer/colder portions.

According to an exemplary embodiment, a spray device may be provided to supply a water spray or mist to an object having optically inhomogeneous properties (such as an object made of steel). This may generate a thin water layer on the object.

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.
Figure 1 illustrates an analysis system according to an exemplary embodiment of the invention.
Figure 2 illustrates a principle of a light-section procedure which may be implemented in an analysis system according to an exemplary embodiment of the invention.
Figure 3 illustrates a measured surface of a lever obtained by a light-section procedure according to Figure 2.
Figure 4 shows a difference image indicative of a difference between a defect-free member and a defective member.
Figure 5 illustrates a magneto-thermal test procedure which may be employed in an analysis system according to an exemplary embodiment of the invention.
Figure 6 illustrates an eddy current flow path in an object with a penetration depth around a crack.
Figure 7 illustrates a combined measurement apparatus according to an exemplary embodiment of the invention.
Figure 8 illustrates a combined measurement result of a measured three-dimensional geometry and temperature distribution of an object, wherein a defective portion of the object is visible as an enhanced heating zone.

The illustration in the drawing is schematically. In different drawings, similar or identical elements are provided with the same reference signs.

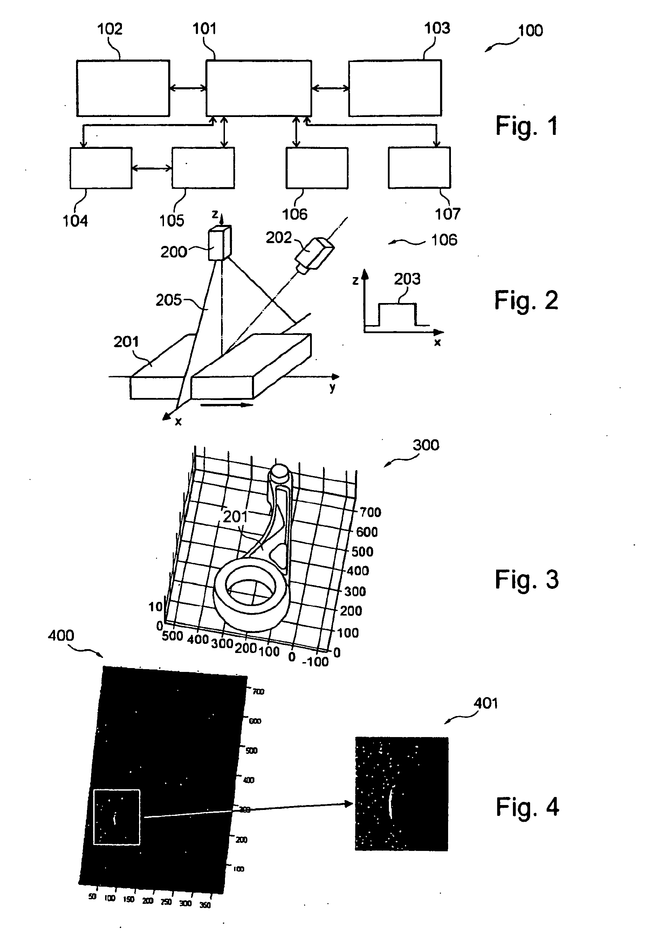

In the following, referring to **Fig. 1**, an analysis apparatus 100 for analyzing a tool or member according to an exemplary embodiment of the invention will be explained.

The analysis device 100 comprises a microprocessor 101 as a control, processing or evaluation unit. The microprocessor 101 controls the entire apparatus 100.

The microprocessor 101 is coupled bidirectionally to an input/output (I/O) device 102. The input/output device 102 allows a human operator to define or specify the analysis performed by the analysis apparatus 100. Particularly, the input/output device 102 comprises input elements such as a joystick, a keypad, a trackball or even a microphone of voice recognition system. By operating such input units, a user may define the operation of the analysis apparatus 100. Furthermore, the input/output device 102 may comprise a display unit such as an LCD, a TFT device, a plasma device, a computer monitor or the like. Via such a display unit, measurement information may be displayed for a human user, and a human user may inspect the results.

Furthermore, the microprocessor 101 is bidirectionally coupled to a database 103 which may be an EEPROM, a harddisk, a flash memory or the like. In the database 103, data may be stored, such as analysis routines, information regarding tolerances, information regarding golden devices, measurement results from components of the apparatus 100, historical measurement results, or the like.

Furthermore, the microprocessor 101 is coupled for a bidirectional data transfer to a thermal analysis device 104 which is adapted for analyzing a thermal distribution of the object under investigation in response to a thermal activation of the object. Furthermore, the microprocessor 101 is coupled for a bidirectional data transfer with a thermal excitation unit 105 adapted for thermally activating/heating the object. The thermal excitation unit 105 may comprise an induction coil adapted for being powered for inducing eddy currents in the object to thermally activate the object. After such a thermal activation of the object (not shown in Fig. 1) using unit 105, the thermal analysis device 104 may use an infrared camera for detecting the thermal properties, that is to say a thermal distribution of a surface of the object.

The components 104 and 105 may be communicatively coupled to one another, for instance to coordinate their performance.

Beyond this, the apparatus 100 comprises a geometrical measurement device 106 adapted for analyzing the geometric external shape of the object. Although not shown in Fig. 1, the geometrical measurement device 106 may comprise a light source for illuminating the object and a camera for detecting light reflected by the object. More particularly, the geometrical measurement device 106 may comprise an optical radiation source, namely a laser, for illuminating a surface of the object with optical light. Furthermore, a camera, such as a CCD camera, may be provided for detecting the electromagnetic radiation after interaction with the object (particularly after reflection at the object). This interaction may be a reflection of the light at the object surface, or a transmission or a fluorescence of the light. Therefore, the geometrical measurement device 104 may be operated in a reflection geometry or in a transmission geometry. As an alternative to optical light, it is possible to use X-rays, to thereby detect the three-dimensional structure of the object with an X-ray analysis.

Furthermore, a conveyor unit 107 is provided which is adapted for moving the object between the thermal analysis device 104 and the geometrical measurement device 106. Also the conveyor unit may be operated under control of the microprocessor 101.

All the results of the measurements, namely of the thermal measurement and of the geometrical measurement may be supplied to the microprocessor 101 which may then generate a thermal image and a geometrical image. Furthermore, the two images are projected to one another, for example to overlay them so as to have a combined geometrical and thermal impression of the object characteristic in a single result image.

The microprocessor 101 may then compare the results with desired data stored in the database 103 and may then classify the object to be acceptable or not acceptable. This information may be output to the input/output device 102 or may also be the basis for an automatic sorting of the members or objects under investigation into acceptable and non-acceptable objects. For analyzing the result image reflecting geometrical and thermal information, the result image may be further evaluated by applying image processing, thereby allowing to determine specific geometrical parameters (such as dimensions, angles, etc.), specific temperature zones, etc. Such data may be compared by the microprocessor 101 to characterize the object under investigation.

In the following, the combined method according to an exemplary embodiment of the invention will be explained in more detail.

The test comprises two methods which may be carried out essentially simultaneously during a motion of the object. The measurement results are evaluated in a combined manner.

With a so-called light-section procedure, the three-dimensional geometry of the object is measured and its surface properties, such as reflection properties, can be tested as well.

**Fig. 2** shows a light-section procedure carried out by the geometrical analysis unit 106.

A laser 200 generates a light beam 205 which impinges on the object 201. The reflected laser light is detected by a camera 202 allowing to derive an xz-contour 203 (that is to say a two-dimensional projection) of the shape of the object 201.

Thus, the object 201 is illuminated with a laser plane, and the generated contour line can be detected by the camera 202. The member 201 may be moved along an y-direction relative to the arrangement of the laser 200 and the camera 202. The various lines 203 may be combined in the computer 101 to form a three-dimensional surface image, as shown as a geometrical image 300 in **Fig. 3****.**

By comparing the measurement results of a defect-free and a defective member 201, geometrical defects of the member 201 may be detected and tolerances may be controlled.

**Fig. 4** shows a difference image 400 between a defect-free and a defective member 201.

Particularly, a possibly defective portion of the member 201 is shown in an enlarged or zoomed view 401 of the image 400. Thus, Fig. 4 shows a difference image 400, wherein a defect may be made visible and automatically detectable by image processing routines.

In the context of a magneto-thermal test procedure, the object 201 is briefly heated inductively, and the temperature distribution at the surface of the object 201 may be detected using an infrared camera 104.

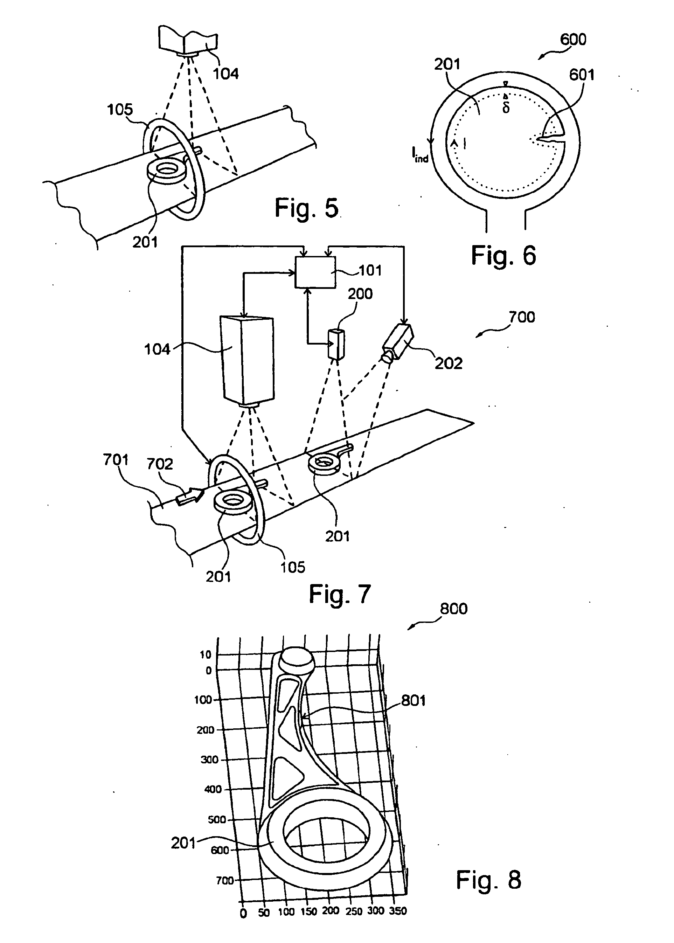

A corresponding test method which is shown in **Fig. 5** can be used for electrically conductive materials in which an eddy current may be induced.

In the case of magnetic materials, such as steel, the eddy currents induced in the object 201 by applying a high-frequency electric signal to a coil 105 surrounding the object 201 flow - due to the high permeability of the material of the object 201 - only in a very thin surface layer (so-called skin effect). When the depth of a crack 601 in the object 201 is comparable with a thickness of this layer, the current flows around the crack 601, as shown in the illustration 600 of **Fig. 6****.**

This may generate a locally increased current depth at the edge of the crack 601, resulting in a locally increased temperature around the crack 601. The temperature increase at the crack 601 edge depends on the depth of the crack 601: The deeper the crack 601, the larger is the temperature increase. This fact allows to determine the depth of the crack 601 using the observed temperature.

In the case of non-magnetic materials, an eddy current is forced inside of the interior of the metal by the crack 601, therefore the crack 601 may be detectable in non-magnetic materials as a lower temperature portion, using an infrared image detected by an infrared camera 104.

In a complex geometry, a non-constant temperature distribution may occur around edges or indentations, which may make the mere evaluation of the infrared images more difficult and in some cases ambiguous.

Implementing a method according to an exemplary embodiment of the invention, the two techniques shown isolatedly in Fig. 2 and in Fig. 5 may be combined synergetically to eliminate or suppress ambiguity in result interpretation

A corresponding analysis system 700 according to an exemplary embodiment of the invention is shown in **Fig. 7****.**

The object 201 (device under test) is moved along a conveyor belt 701 along a direction 702. Then, first, the object 702 is investigated by a thermally magnetic method, which may be made possible by components 104 and 105. Subsequently, an optical contour measurement is performed by the units 200, 202. Operation of components 104, 105, 200, 202 is coordinated by the microprocessor 101.

The object 201 is therefore examined twice, and the individual images are evaluated in common. Therefore, when evaluating the infrared images, also geometrical information is available and a false interpretation of edges may be avoided or suppressed.

For the combined evaluation of the images, specific image processing algorithms may be employed, which may allow to recognize objects in the infrared and laser-section images and project them onto one another.

In **Fig. 8**, the combined result is illustrated as an image 800.

In the image 800 of the object 201, a defective portion 801 is identified in which an unusual high temperature spot has been found by the magneto-thermal measurement. The structure of the object 201 has been determined optically.

The three-dimensional surface may be coloured in accordance with the temperature distribution which has been measured by the magneto-thermal method. In the present case, the defect 801, a forging lap, may be recognized at an arm of the lever 201 as a region having an increased temperature compared to a surrounding.

The developed image processing algorithms can also be used in order to compare the images with images of defect-free "golden" devices, and to receive a decision based on the difference of the images, whether the object 201 is defective or defect-free, and where a possible defect may be. This comparison procedure can be automated by a computer. It is also possible to classify the detected errors automatically, for instance to categorize them into defect type categories.

It may be advantageous that geometrical defects, tolerances and near-surface cracks may be detected in one common procedure. The geometrical and the optical measurement data may be stored together in a database and may be used for a statistical evaluation. By the geometrical information, heating portions at edges or indentations can be evaluated in an improved manner in the infrared picture.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. An apparatus (100, 701) for analyzing an object (201), the apparatus (100, 701) comprising
a thermal analysis device (104) adapted for analyzing a thermal distribution of the object (201) in response to a thermal activation of the object (201);
a geometrical measurement device (106) adapted for analyzing the geometry of the object (201);
an evaluation unit (101) adapted for performing a combined evaluation of information obtained from the thermal analysis device (104) and from the geometrical measurement device (106);
wherein the evaluation unit (101) is adapted for projecting images of the object (201) obtained by the thermal analysis device (104) and obtained by the geometrical measurement device (106) over one another, so as to form a single image of the object under examination indicating results of both the geometrical analysis and the thermal analysis.

2. The apparatus (100, 701) of claim 1,
comprising a thermal excitation unit (105) adapted for thermally exciting the object (201), particularly for thermally exciting the object (201) by induction or irradiation with electromagnetic radiation.

3. The apparatus (100, 701) of claim 2,
wherein the thermal excitation unit (105) comprises an induction coil adapted for being powered for inducing eddy currents in the object (201) to thereby thermally excite the object (201).

4. The apparatus (100, 701) of any one of claims 1 to 3, wherein the thermal analysis device (104) comprises a thermal image camera, particularly an infrared camera.

5. The apparatus (100, 701) of any one of claims 1 to 4, comprising at least one of the following features:
the geometrical measurement device (106) comprises an electromagnetic radiation source (200) adapted for illuminating a surface of the object (201) with electromagnetic radiation and comprises an electromagnetic radiation detector (202) adapted for detecting the electromagnetic radiation after interaction with the object (201);
the geometrical measurement device (106) comprises an electromagnetic radiation source (200) adapted for illuminating a surface of the object (201) with electromagnetic radiation and comprises an electromagnetic radiation detector (202) adapted for detecting the electromagnetic radiation after interaction with the object (201), wherein the electromagnetic radiation source (200) comprises an optical light source, particularly a laser;
the geometrical measurement device (106) comprises an electromagnetic radiation source (200) adapted for illuminating a surface of the object (201) with electromagnetic radiation and comprises an electromagnetic radiation detector (202) adapted for detecting the electromagnetic radiation after interaction with the object (201), wherein the electromagnetic radiation detector (202) comprises an optical camera, particularly a charge coupled device or a CMOS camera;
the apparatus (100, 701) is adapted for moving the geometrical measurement device (106) and the object (201) relative to one another during performing the geometrical analysis;
the apparatus (100, 701) is adapted for moving the thermal analysis device (104) and the object (201) relative to one another during performing the thermal analysis.

6. The apparatus (100, 701) of any one of claims 1 to 5, wherein the evaluation unit (101) is adapted for overlaying images of the object (201) obtained by the thermal analysis device (104) and obtained by the geometrical measurement device (106).

7. The apparatus (100, 701) of any one of claims 1 to 6, wherein the evaluation unit (101) is adapted for determining a three-dimensional model of the object (201) based on information obtained by the geometrical measurement device (106) and is adapted for patterning, particularly for coloring, a surface of the three-dimensional model in accordance with temperature distribution information obtained by the thermal analysis device (104).

8. The apparatus (100, 701) of any one of claims 1 to 7, wherein the evaluation unit (101) is adapted for comparing results obtained from the combined evaluation with predetermined target data and for classifying the object (201) as defective when a deviation of the results from the target data exceeds a predetermined threshold value.

9. The apparatus (100, 701) of any one of claims 1 to 8, wherein the evaluation unit (101) is adapted for comparing results obtained from the combined evaluation with predetermined target data and for classifying a portion of the object (201) as defective when a deviation of the results from the target data exceeds a predetermined threshold value.

10. The apparatus (100, 701) of any one of claims 1 to 9, comprising a conveyor unit (701) adapted for moving the object (201) at least between the thermal analysis device (104) and the geometrical measurement device (106).

11. The apparatus (100, 701) of any one of claims 1 to 10, comprising a robot adapted for gripping the object (201) and for moving the object (201) at least between the thermal analysis device (104) and the geometrical measurement device (106).

12. A method of analyzing an object (201), the method comprising
analyzing a thermal distribution of the object (201) in response to a thermal activation of the object (201);
analyzing the geometry of the object (201);
combining information obtained from the thermal analysis and from the geometrical analysis;
projecting images of the object (201) obtained by the thermal analysis and obtained by the geometrical analysis over one another, so as to form a single image of the object under examination indicating results of both the geometrical analysis and the thermal analysis.

13. A program element, which, when being executed by a processor (101), is adapted to carry out a method of claim 12 of analyzing an object (201).

14. A computer-readable medium, in which a computer program is stored which, when being executed by a processor (101), is adapted to carry out a method of claim 12 of analyzing an object (201).

15. A method of using an apparatus (100, 701) of any one of claims 1 to 11 or a method of claim 12 for detecting defects, particularly cracks, in or near a surface of the object (201).

## Patentansprüche

1. Apparat (100, 701) zum Analysieren eines Objekts (201), wobei der Apparat aufweist:
eine Thermal-Analysevorrichtung (104) eingerichtet zum Analysieren einer thermischen Verteilung des Objekts (201) in Reaktion auf eine thermische Anregung des Objekts (201);
eine Geometrie-Messvorrichtung (106) eingerichtet zum Analysieren der Geometrie des Objekts (201);
eine Auswerteeinheit (101) eingerichtet zum Durchführen einer kombinierten Auswertung von Informationen, welche von der Thermal-Analysevorrichtung (104) und von der Geometrie-Messvorrichtung (106) erlangt werden;
wobei die Auswerteeinheit (101) eingerichtet ist zum Übereinander-Projizieren von Bildern des Objekts (201), welche mittels der Thermal-Analysevorrichtung (104) und der Geometriemessvorrichtung (106) erlangt wurden, um so ein einziges Bild des Objekts unter Beobachtung zu bilden, welches Ergebnisse sowohl der Geometrie-Analyse als auch der Thermal-Analyse angibt.

2. Apparat (100, 701) gemäß Anspruch 1,
welcher eine thermische Anregungseinheit (105) aufweist, die zum thermischen Anregen des Objekts (201) eingerichtet ist, insbesondere zum thermischen Anregen des Objekts (201) mittels Induktion oder Bestrahlung mit elektromagnetischer Strahlung.

3. Apparat (100, 701) gemäß Anspruch 2,
wobei die thermische Anregungseinheit (105) eine Induktionsspule aufweist, welche eingerichtet ist, angetrieben zu werden, zum Induzieren von Wirbelströmen in dem Objekt (201), um dadurch das Objekt (201) thermisch anzuregen.

4. Apparat (100, 701) gemäß einem der Ansprüche 1 bis 3,
wobei die Thermal-Analysevorrichtung (104) eine Thermalbild-Kamera, insbesondere eine Infrarotkamera, aufweist.

5. Apparat (100, 701) gemäß einem der Ansprüche 1 bis 4, welcher zumindest der eines der folgenden Merkmale aufweist:
die Geometrie-Messvorrichtung (106) weist eine elektromagnetische Strahlungsquelle (200) auf, die zum Beleuchten einer Oberfläche des Objekts (201) mit elektromagnetischer Strahlung eingerichtet ist, und weist einen elektromagnetischen Strahlungsdetektor (202) auf, der zum Detektieren von elektromagnetischer Strahlung nach Interaktion mit dem Objekt eingerichtet ist;
die Geometrie-Messvorrichtung (106) weist eine elektromagnetische Strahlungsquelle (200) auf, die zum Beleuchten einer Oberfläche des Objekts (201) mit elektromagnetischer Strahlung eingerichtet ist, und weist einen elektromagnetischen Strahlungsdetektor (202) auf, der zum Detektieren von elektromagnetischer Strahlung nach Interaktion mit dem Objekt eingerichtet ist, wobei die elektromagnetische Strahlungsquelle eine optische Lichtquelle, insbesondere einen Laser, aufweist;
die Geometrie-Messvorrichtung (106) weist eine elektromagnetische Strahlungsquelle (200) auf, die zum Beleuchten einer Oberfläche des Objekts (201) mit elektromagnetischer Strahlung eingerichtet ist, und weist einen elektromagnetischen Strahlungsdetektor (202) auf, der zum Detektieren von elektromagnetischer Strahlung nach Interaktion mit dem Objekt eingerichtet ist, wobei der elektromagnetische Strahlungsdetektor (202) eine optische Kamera, insbesondere eine Charge-Coupled Device oder eine CMOS Kamera, aufweist;
der Apparat (100, 701) ist eingerichtet, die Geometrie-Messvorrichtung (106) und das Objekt während des Durchführens der Geometrie-Analyse relativ zueinander zu bewegen;
der Apparat (100, 701) ist eingerichtet die Thermal-Analysevorrichtung (104) und das Objekt während des Durchführens der Thermal-Analyse relativ zueinander zu bewegen.

6. Apparat (100, 701) gemäß einem der Ansprüche 1 bis 5, wobei die Auswerteeinheit (101) zum Überlagern von Bildern des Objekts (201) eingerichtet ist, die mittels der Thermal-Analysevorrichtung (104) erlangt wurden und mittels der Geometrie-Messvorrichtung erlangt wurden.

7. Apparat (100, 701) gemäß einem der Ansprüche 1 bis 6, wobei die Auswerteeinheit (101) zum Bestimmen eines dreidimensionalen Models des Objekts (201) eingerichtet ist, basierend auf Informationen, welche mittels der Geometrie-Messvorrichtung (106) erlangt wurden, und die zum Gestalten, insbesondere zum Einfärben, einer Oberfläche des dreidimensionalen Models in Übereinstimmung mit Temperaturverteilungsinformationen, die mittels der Thermal-Analysevorrichtung (104) erlangt wurden, eingerichtet ist.

8. Apparat (100, 701) gemäß einem der Ansprüche 1 bis 7, wobei die Auswerteeinheit (101) zum Vergleichen von Ergebnissen, die von der kombinierten Auswertung erlangt wurden, mit vorgegebenen Zieldaten und zum Klassifizieren des Objekts (201) als defekt, wenn eine Abweichung der Ergebnisse von dem Zieldaten einen vorgegebenen Schwellenwert übersteigt, eingerichtet ist.

9. Apparat (100, 701) gemäß einem der Ansprüche 1 bis 8, wobei die Auswerteeinheit (101) zum Vergleichen von Ergebnissen, die von der kombinierten Auswertung erlangt wurden, mit vorgegebenen Zieldaten, und zum Klassifizieren eines Abschnitts des Objekts (201) als defekt, wenn eine Abweichung der Ergebnisse von dem Zieldaten einen vorgegebenen Schwellenwert übersteigt, eingerichtet ist.

10. Apparat (100, 701) gemäß einem der Ansprüche 1 bis 9, welcher eine Fördereinheit (701) aufweist, die eingerichtet ist, das Objekt zumindest zwischen der Thermal-Analysevorrichtung (104) und der Geometrie-Messvorrichtung (106) zu bewegen.

11. Apparat (100, 701) gemäß einem der Ansprüche 1 bis 10, welcher einen Robot aufweist, der eingerichtet ist, das Objekt (201) zu greifen und das Objekt (201) zumindest zwischen der Thermal-Analysevorrichtung (104) und der Geometrie-Messvorrichtung (106) zu bewegen.

12. Verfahren zum Analysieren eines Objekts (201), wobei das Verfahren aufweist:
Analysieren einer thermischen Verteilung des Objekts (201) in Reaktion auf eine thermische Anregung des Objekts (201);
Analysieren der Geometrie des Objekts (201);
Kombinieren von Informationen, die von der Thermal-Analyse und der Geometrie-Analyse erlangt wurden;
Übereinander-Projizieren von Bildern des Objekts (201), die mittels der Thermal-Analyse erlangt wurden und mittels der Geometrie-Analyse erlangt wurden, um ein einzelnes Bild des Objekts unter Prüfung zu bilden, welches Ergebnisse sowohl der Geometrie-Analyse als auch der Thermal-Analyse anzeigt.

13. Programmelement, welches, wenn es mittels eines Prozessors (101) ausgeführt wird, eingerichtet ist, ein Verfahren gemäß Anspruch 12 zum Analysieren eines Objekts (201) auszuführen.

14. Computerlesbares Medium, in welchem ein Computerprogramm gespeichert ist, welches, wenn es mittels eines Prozessors (101) ausgeführt wird, eingerichtet ist, ein Verfahren gemäß Anspruch 12 zum Analysieren eines Objekts (201) auszuführen.

15. Verfahren zum Verwenden eines Apparats (100, 701) gemäß einem der Ansprüche 1 bis 11 oder eines Verfahrens gemäß Anspruch 12 zum Detektieren von Defekten, insbesondere von Rissen, in oder nahe einer Oberfläche des Objekts (201).

## Revendications

1. Appareil (100, 701) permettant d'analyser un objet (201), l'appareil (100, 701) comprenant
un dispositif d'analyse thermique (104) adapté pour analyser une répartition thermique de l'objet (201) en réponse à l'activation thermique de l'objet (201) ;
un dispositif de mesure géométrique (106) adapté pour analyser la géométrie de l'objet (201) ;
une unité d'évaluation (101) adaptée pour réaliser une évaluation combinée des informations obtenues à partir du dispositif d'analyse thermique (104) et à partir du dispositif de mesure géométrique (106) ;
dans lequel l'unité d'évaluation (101) est adaptée pour projeter les images de l'objet (201) obtenue par le dispositif d'analyse thermique (104) et obtenue par le dispositif de mesure géométrique (106) l'une sur l'autre, de façon à former une seule image de l'objet qui est examiné indiquant à la fois des résultats de l'analyse géométrique et de l'analyse thermique.

2. Appareil (100, 701) selon la revendication 1,
comprenant une unité d'excitation thermique (105) adaptée pour exciter thermiquement l'objet (201), en particulier pour exciter thermiquement l'objet (201) par induction ou irradiation par rayonnement électromagnétique.

3. Appareil (100, 701) selon la revendication 2,
dans lequel l'unité d'excitation thermique (105) comprend une bobine d'induction adaptée pour être alimentée afin d'induire des courants de Foucault dans l'objet (201) pour exciter ainsi thermiquement l'objet 201).

4. Appareil (100, 701) selon l'une quelconque des revendications 1 à 3, dans lequel le dispositif d'analyse thermique (104) comprend une caméra à image thermique, en particulier une caméra infrarouge.

5. Appareil (100, 701) selon l'une quelconque des revendications 1 à 4, comprenant au moins une des caractéristiques suivantes :
le dispositif de mesure géométrique (106) comprend une source de rayonnement électromagnétique (200) adaptée pour éclairer une surface de l'objet (201) par rayonnement électromagnétique et comprend un détecteur de rayonnement électromagnétique (202) adapté pour détecter le rayonnement électromagnétique après interaction avec l'objet (201) ;
le dispositif de mesure géométrique (106) comprend une source de rayonnement électromagnétique (200) adaptée pour éclairer une surface de l'objet (201) par rayonnement électromagnétique et comprend un détecteur de rayonnement électromagnétique (202) adapté pour détecter le rayonnement électromagnétique après interaction avec l'objet (201), dans lequel la source de rayonnement électromagnétique (200) comprend une source de lumière optique, en particulier un laser ;
le dispositif de mesure géométrique (106) comprend une source de rayonnement électromagnétique (200) adaptée pour éclairer une surface de l'objet (201) par rayonnement électromagnétique et comprend un détecteur de rayonnement électromagnétique (202) adapté pour détecter le rayonnement électromagnétique après interaction avec l'objet (201), dans lequel le détecteur de rayonnement électromagnétique (202) comprend une caméra optique, en particulier une caméra à transfert de charge ou CMOS ;
l'appareil (100, 701) est adapté pour déplacer le dispositif de mesure géométrique (106) et l'objet (201) l'un par rapport à l'autre durant la réalisation de l'analyse géométrique ;
l'appareil (100, 701) est adapté pour déplacer le dispositif d'analyse thermique (104) et l'objet (201) l'un par rapport à l'autre durant la réalisation de l'analyse thermique.

6. Appareil (100, 701) selon l'une quelconque des revendications 1 à 5, dans lequel l'unité d'évaluation (101) est adaptée pour superposer des images de l'objet (201) obtenue par le dispositif d'analyse thermique (104) et obtenue par le dispositif de mesure géométrique (106).

7. Appareil (100, 701) selon l'une quelconque des revendications 1 à 6, dans lequel l'unité d'évaluation (101) est adaptée pour déterminer un modèle tridimensionnel de l'objet (201) basé sur des informations obtenues par le dispositif de mesure géométrique (106) et est adaptée pour modéliser, en particulier pour colorier une surface du modèle tridimensionnel en conformité avec des informations de la répartition de température obtenues par le dispositif d'analyse thermique (104).

8. Appareil (100, 701) selon l'une quelconque des revendications 1 à 7, dans lequel l'unité d'évaluation (101) est adaptée pour comparer les résultats obtenus à partir de l'évaluation combinée à des données cibles prédéterminées et pour classer l'objet (201) comme défectueux lorsqu'un écart des résultats par rapport aux données cibles dépasse une valeur seuil prédéterminée.

9. Appareil (100, 701) selon l'une quelconque des revendications 1 à 8, dans lequel l'unité d'évaluation (101) est adaptée pour comparer des résultats obtenus de l'évaluation combinée à des données cibles prédéterminées et pour classer une partie de l'objet (201) comme défectueuse lorsqu'un écart des résultats par rapport aux données cibles dépasse une valeur seuil prédéterminée.

10. Appareil (100, 701) selon l'une quelconque des revendications 1 à 9, comprenant une unité de transport (701) adaptée pour déplacer l'objet (201) au moins entre le dispositif d'analyse thermique (104) et le dispositif de mesure géométrique (106).

11. Appareil (100, 701) selon l'une quelconque des revendications 1 à 10, comprenant un robot adapté pour saisir l'objet (201) et pour déplacer l'objet (201) au moins entre le dispositif d'analyse thermique (104) et le dispositif de mesure géométrique (106).

12. Procédé d'analyse d'un objet (201), le procédé comprenant :
l'analyse d'une répartition thermique de l'objet (201) en réponse à l'activation thermique de l'objet (201) ;
l'analyse de la géométrie de l'objet (201) ;
la combinaison d'informations obtenues par l'analyse thermique et par l'analyse géométrique ;
la projection d'images de l'objet (201) obtenue par l'analyse thermique et obtenue par l'analyse géométrique l'une sur l'autre, de façon à former une seule image de l'objet qui est examiné indiquant des résultats à la fois de l'analyse géométrique et de l'analyse thermique.

13. Elément de programme qui, lorsqu'il est exécuté par un processeur (101), est adapté pour réaliser un procédé de la revendication 12 pour analyser un objet (201).

14. Support lisible par ordinateur, dans lequel un programme informatique est stocké qui, lorsqu'il est exécuté par un processeur (101), est adapté pour réaliser un procédé de la revendication 12 pour analyser un objet (201).

15. Procédé d'utilisation d'un appareil (100, 701) selon l'une quelconque des revendications 1 à 11 ou procédé selon la revendication 12, permettant de détecter des défauts, en particulier des fissures, dans ou près d'une surface de l'objet (201).
